# EUROPEAN PATENT SPECIFICATION

(11) **EP 4 360 959 B1**
(45) Date of publication and mention of the grant of the patent: **07.10.2026**
(21) Application number: 23165005.2
(22) Date of filing: 29.03.2023
(51) Int. Cl.: B60R 16/03

(54) **VEHICLE UNINTERRUPTIBLE POWER SUPPLY SYSTEM AND CONTROL METHOD THEREOF**
UNTERBRECHUNGSFREIES STROMVERSORGUNGSSYSTEM FÜR EIN FAHRZEUG UND STEUERUNGSVERFAHREN DAFÜR
SYSTÈME D'ALIMENTATION ÉLECTRIQUE SANS COUPURE DE VÉHICULE ET SON PROCÉDÉ DE COMMANDE

(30) Priority: 28.10.2022 US 202263420467 P
(43) Date of publication of application: 01.05.2024
(73) Proprietor: Getac Technology Corporation, New Taipei City 221009 (TW)
(72) Inventor: HU, Chien-Chih, 11568 Taipei City (TW)
(74) Representative: Viering, Jentschura & Partner mbB Patent- und Rechtsanwälte

(56) References cited:
- US-A1- 2020 259 363
- US-A1- 2021 237 670
- US-A1- 2022 089 111
- US-A1- 2022 103 007
- US-A1- 2022 200 311
- US-B2- 10 910 875
- US-B2- 11 059 371
- US-B2- 9 347 414

## Description

### FIELD OF THE DISCLOSURE

The present disclosure relates to a power management system and a power management method thereof, and more particularly to a vehicle uninterruptible power supply system and a control method thereof.

### BACKGROUND OF THE DISCLOSURE

When an engine of a vehicle is turned off, as long as a vehicle ignition is turned on, a vehicle power supply can still provide power to a vehicle load for operation. Conversely, when the engine and the vehicle ignition are turned off, the vehicle power supply will stop supplying the power to the vehicle load.

In certain particular situations, e.g., where a police car of an on-duty police officer is parked on a side of a road, in order to keep a digital image recorder installed in the police car running, the police officer usually turns off the engine, but does not turn off the vehicle ignition. However, since power consumption of the digital video recorder is large, if a driver does not pay attention to the remaining power of the vehicle power supply, the power of the vehicle power supply can be easily exhausted to the extent that the engine cannot be started again.

### SUMMARY OF THE DISCLOSURE

In response to the above-referenced technical inadequacies, the present disclosure provides a vehicle uninterruptible power supply system and a control method thereof.

In order to solve the above-mentioned problems, one of the technical aspects adopted by the present disclosure is to provide a vehicle uninterruptible power supply system. The vehicle uninterruptible power supply system is adapted to a vehicle load and a vehicle power supply. The vehicle uninterruptible power supply system includes a control circuit, a charging and discharging circuit, and a backup battery. The control circuit is connected to the vehicle power supply and the vehicle load. The charging and discharging circuit is connected to the control circuit, and the backup battery is connected to the charging and discharging circuit and the control circuit. When the control circuit receives an ignition-on signal, the control circuit instructs the charging and discharging circuit to use one of the vehicle power supply and the backup battery for charging the vehicle load according to a voltage of the vehicle power supply and a voltage of the backup battery.

In order to solve the above-mentioned problems, another one of the technical aspects adopted by the present disclosure is to provide a control method of a vehicle uninterruptible power supply system. The control method includes: instructing, by a control circuit, a charging and discharging circuit to use one of a vehicle power supply and a backup battery for charging a vehicle load according to a voltage of the vehicle power supply and a voltage of the backup battery when the control circuit receives an ignition-on signal; instructing, by the control circuit, the charging and discharging circuit to use one of the vehicle power supply and the backup battery for charging the vehicle load according to the voltage of the backup battery when the control circuit receives an ignition-off signal; and preventing, by the control circuit, the vehicle power supply and the backup battery from charging the vehicle load when the control circuit receives the ignition-off signal and after the charging and discharging circuit uses one of the vehicle power supply and the backup battery to charge the vehicle load.

Therefore, in the vehicle uninterruptible power supply system and the control method thereof provided by the present disclosure, time points at which the vehicle power supply and the backup battery charge and do not charge the vehicle load can be controlled in a programmable manner. Accordingly, power of the vehicle power supply can be prevented from being consumed by the vehicle load, so that the power of the vehicle power supply is sufficient for starting the engine again.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The described embodiments may be better understood by reference to the following description and the accompanying drawings, in which:
FIG. 1 is a functional block diagram of a vehicle uninterruptible power supply system according to a first embodiment of the present disclosure;
FIG. 2 is a flowchart illustrating one example of a control method when an ignition-on event occurs to the vehicle uninterruptible power supply system of FIG. 1;
FIG. 3 is a flowchart illustrating one example of the control method when an ignition-off event occurs to the vehicle uninterruptible power supply system of FIG. 1;
FIG. 4 is a functional block diagram of the vehicle uninterruptible power supply system according to a second embodiment of the present disclosure; and
FIG. 5 is a flowchart illustrating remote parameter configuration of the vehicle uninterruptible power supply system of FIG. 4.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like. In addition, the term "connect" in the context of the present disclosure means that there is a physical connection between two elements, and the two elements are directly or indirectly connected.

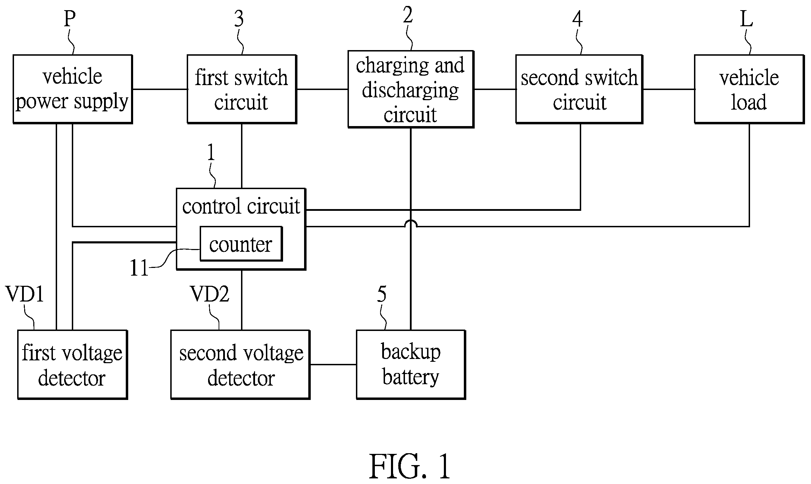

FIG. 1 is a functional block diagram of a vehicle uninterruptible power supply system according to a first embodiment of the present disclosure. Referring to FIG 1, the vehicle uninterruptible power supply system is adapted to a vehicle power supply P and a vehicle load L. The vehicle uninterruptible power supply system includes, for example, a control circuit 1, a charging and discharging circuit 2, a first switch circuit 3, a second switch circuit 4, a backup battery 5, a first voltage detector VD1, and a second voltage detector VD2, but is not limited thereto.

The control circuit 1 is connected to the vehicle power supply P, the vehicle load L, the charging and discharging circuit 2, the first switch circuit 3, the second switch circuit 4, the first voltage detector VD1, and the second voltage detector VD2. The charging and discharging circuit 2 is further connected to the first switch circuit 3, the second switch circuit 4, and the backup battery 5. The first switch circuit 3 is further connected to the vehicle power supply P. The second switch circuit 4 is further connected to the charging and discharging circuit 2 and the vehicle load L. The first voltage detector VD1 is connected to the vehicle power supply P, and the second voltage detector VD2 is connected to the backup battery 5.

When a vehicle ignition that is in an off state is turned on, the control circuit 1 receives an ignition-on signal. Next, the control circuit 1 obtains a voltage of the vehicle power supply P by the first voltage detector VD1, and determines whether or not the voltage of the vehicle power supply P is less than a first voltage threshold (e.g., 12 volts). When the voltage of the vehicle power supply P is not less than the first voltage threshold, the control circuit 1 instructs the charging and discharging circuit 2 to use the vehicle power supply P to charge the vehicle load L. At this time, the charging and discharging circuit 2 does not use the backup battery 5 for charging the vehicle load L. When the voltage of the vehicle power supply P is less than the first voltage threshold, the control circuit 1 controls the first switch circuit 3 to be in the off state, so as to prevent the vehicle power supply P from charging the vehicle load L.

Moreover, when the voltage of the vehicle power supply P is less than the first voltage threshold, the control circuit 1 further obtains a voltage of the backup battery 5 by the second voltage detector VD2, and determines whether or not the voltage of the backup battery 5 is less than a second voltage threshold (e.g., 9.8 volts). When the voltage of the backup battery 5 is less than the second voltage threshold, the control circuit 1 controls the second switch circuit 4 to be in the off state, so as to prevent the backup battery 5 from charging the vehicle load L. When the voltage of the backup battery 5 is not less than the second voltage threshold, the control circuit 1 instructs the charging and discharging circuit 2 to use the backup battery 5 for charging the vehicle load L. At this time, the charging and discharging circuit 2 does not use the vehicle power supply P to charge the vehicle load L.

When the vehicle ignition that is in an on state is turned off, the control circuit 1 receives an ignition-off signal. When the vehicle power supply P is used to charge the vehicle load L and the control circuit 1 receives the ignition-off signal, the counter 11 of the control circuit 1 is activated to start counting. Before a counting time of the counter 11 reaches a first time threshold and when the charging and discharging circuit 2 is using the vehicle power supply P to charge the backup battery 5, the control circuit 1 instructs the charging and discharging circuit 2 to stop using the vehicle power supply P for charging the backup battery 5.

When the counting time of the counter 11 reaches the first time threshold (e.g., 5 minutes) and does not reach the second time threshold (e.g., 10 minutes), the control circuit 1 determines whether or not the voltage of the backup battery 5 is less than the second voltage threshold. When the voltage of the backup battery 5 is less than the second voltage threshold, the control circuit 1 instructs the charging and discharging circuit 2 to use the vehicle power supply P for charging the vehicle load L. At this time, the charging and discharging circuit 2 does not use the backup battery 5 to charge the vehicle load L. Conversely, when the voltage of the backup battery 5 is not less than the second voltage threshold, the control circuit 1 instructs the charging and discharging circuit 2 to use the backup battery 5 for charging the vehicle load P. At this time, the charging and discharging circuit 2 does not use the vehicle power supply P to charge the vehicle load L.

When the counting time reaches the second time threshold and does not reach a third time threshold (e.g., 15 minutes), the control circuit 1 outputs the ignition-off signal to the vehicle load L. When the counting time reaches the third time threshold, the control circuit 1 controls the first switch circuit 3 and the second switch circuit 4 to be in the off state, so as to prevent the vehicle power supply P and the backup battery 5 from charging the vehicle load L.

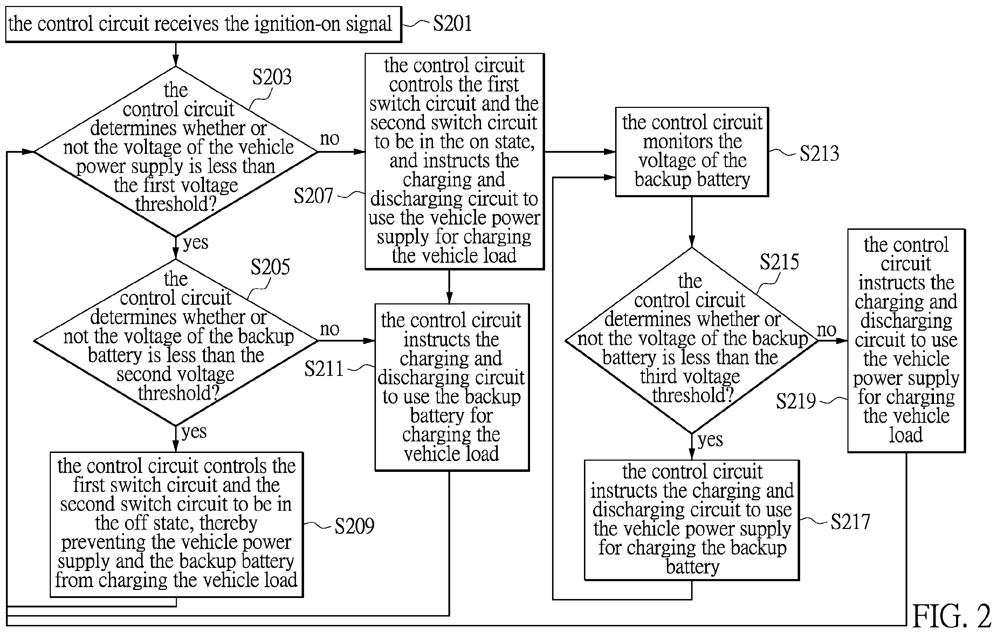

FIG. 2 is a flowchart illustrating one example of a control method when an ignition-on event occurs to the vehicle uninterruptible power supply system of FIG. 1. Referring to FIG. 2, in step S201, the control circuit 1 receives the ignition-on signal. Specifically, when the first switch circuit 3 and the second switch circuit 4 are in the off state and the vehicle ignition that is in the off state is turned on, the control circuit 1 receives the ignition-on signal from the vehicle power supply P.

In step S203, the control circuit 1 determines whether or not the voltage of the vehicle power supply P is less than the first voltage threshold (e.g., 12 volts). If the voltage of the vehicle power supply P is less than the first voltage threshold, step S203 is followed by step S205. If the voltage of the vehicle power supply P is not less than the first voltage threshold, step S203 is followed by step S207. In step S205, the control circuit 1 determines whether or not the voltage of the backup battery 5 is less than the second voltage threshold (e.g., 9.8 volts). In step S207, the control circuit 1 controls the first switch circuit 3 and the second switch circuit 4 to be in the on state, and instructs the charging and discharging circuit 2 to use the vehicle power supply P for charging the vehicle load L. At this time, the charging and discharging circuit 2 does not use the backup battery 5 to charge the vehicle load L.

In step S205, when the voltage of the backup battery 5 is less than the second voltage threshold, step S205 is followed by step S209. When the voltage of the backup battery 5 is not less than the second voltage threshold, step S205 is followed by step S211. In step S209, the control circuit 1 controls the first switch circuit 3 and the second switch circuit 4 to be in the off state, thereby preventing the vehicle power supply P and the backup battery 5 from charging the vehicle load L. After step S209, the control method returns to step S203.

In step S211, the control circuit 1 instructs the charging and discharging circuit 2 to use the backup battery 5 for charging the vehicle load L. At this time, the charging and discharging circuit 2 does not use the vehicle power supply P to charge the vehicle load L. After step S211, the control method returns to step S203.

Step S207 is followed by step S213. In step S213, the control circuit 1 monitors the voltage of the backup battery 5. Step S213 is followed by step S215. In step S215, the control circuit 1 determines whether or not the voltage of the backup battery 5 is less than the third voltage threshold (e.g., 14.7 volts). If the voltage of the backup battery 5 is less than the third voltage threshold, step S215 is followed by step S217. If the voltage of the backup battery 5 is not less than the third voltage threshold, step S215 is followed by step S219. In step S217, the control circuit 1 instructs the charging and discharging circuit 2 to use the vehicle power supply P for charging the backup battery 5. After step S217, the control method returns to step S213. In step S219, the control circuit 1 instructs the charging and discharging circuit 2 to use the vehicle power supply P for charging the vehicle load L. At this time, the charging and discharging circuit 2 does not use the backup battery 5 to charge the vehicle load L. After step S219, the control method returns to step S203.

Specifically, when the vehicle ignition is turned on, the vehicle uninterruptible power supply system monitors the voltage of the vehicle power supply P and the voltage of the backup battery 5. According to whether or not the voltage of the vehicle power supply P and the voltage of the backup battery 5 reach a preset voltage threshold, the vehicle uninterruptible power supply system uses the vehicle power supply P or the backup battery 5 to charge the vehicle load L. In this way, in addition to protecting the vehicle power supply P and the backup battery 5, the vehicle load L can continuously obtain power required for operation.

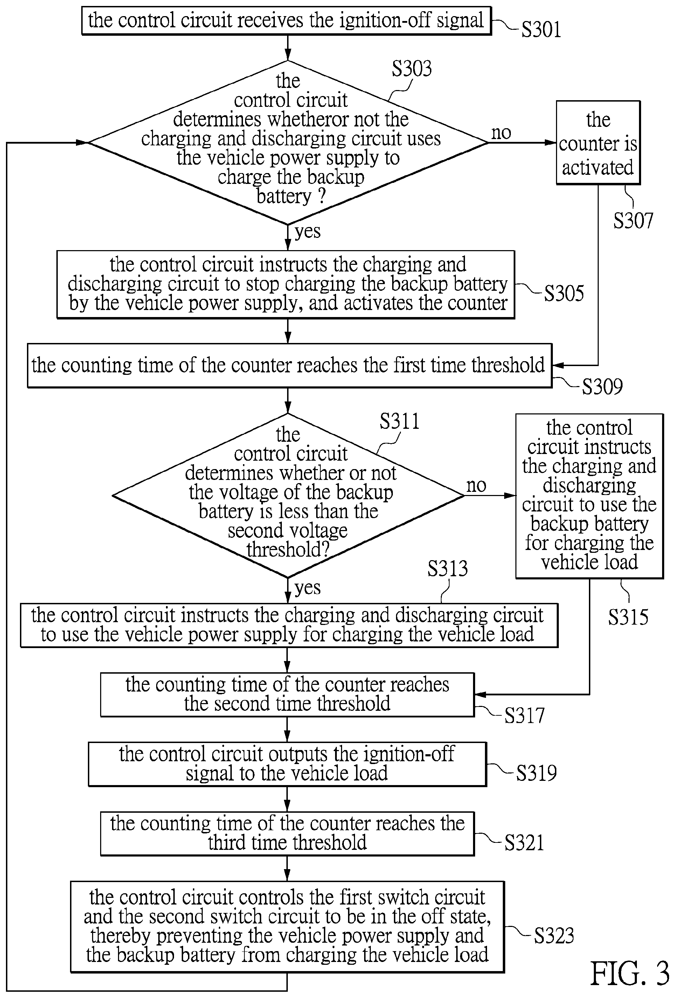

FIG. 3 is a flowchart illustrating one example of the control method when an ignition-off event occurs to the vehicle uninterruptible power supply system of FIG. 1. Referring to FIG. 3, in step S301, the control circuit 1 receives the ignition-off signal. Specifically, when the vehicle power supply P is used to charge the vehicle load L and the vehicle ignition that is in the on state is turned off, the control circuit 1 receives the ignition-off signal from the vehicle power supply P.

In step S303, the control circuit 1 determines whether or not the charging and discharging circuit 2 uses the vehicle power supply P to charge the backup battery 5. If the charging and discharging circuit 2 uses the vehicle power supply P to charge the backup battery 5, step S303 is followed by step S305. If the charging and discharging circuit 2 does not use the vehicle power supply P to charge the backup battery 5, step S303 is followed by step S307. In step S305, the control circuit 1 instructs the charging and discharging circuit 2 to stop charging the backup battery 5 by the vehicle power supply P, and activates the counter 11. In step S307, the counter 11 is activated.

After step S305 and step S307, the control method proceeds to step S309. In step S309, the counting time of the counter 11 reaches the first time threshold. In step S311, the control circuit 1 determines whether or not the voltage of the backup battery 5 is less than the second voltage threshold. The second time threshold is greater than the first time threshold. If the voltage of the backup battery 5 is less than the second voltage threshold, step S311 is followed by step S313. If the voltage of the backup battery 5 is not less than the second voltage threshold, step S311 is followed by step S315. In step S313, the control circuit 1 instructs the charging and discharging circuit 2 to use the vehicle power supply P for charging the vehicle load L. At this time, the charging and discharging circuit 2 does not use the backup battery 5 to charge the vehicle load L. In step S315, the control circuit 1 instructs the charging and discharging circuit 2 to use the backup battery 5 for charging the vehicle load L. At this time, the charging and discharging circuit 2 does not use the vehicle power supply P to charge the vehicle load L.

After step S313 and step S315, the control method proceeds to step S317. In step S317, the counting time of the counter 11 reaches the second time threshold. Step S317 is followed by step S319. In step S319, the control circuit 1 outputs the ignition-off signal to the vehicle load L. In step S321, the counting time of the counter 11 reaches the third time threshold. The third time threshold is greater than the second time threshold. In step S323, the control circuit 1 controls the first switch circuit 3 and the second switch circuit 4 to be in the off state, thereby preventing the vehicle power supply P and the backup battery 5 from charging the vehicle load L. After step S323, the control method returns to step S303.

Specifically, when the vehicle ignition is turned off, the vehicle uninterruptible power supply system does not immediately prevent the vehicle power supply P and the backup battery 5 from charging the vehicle load L. Firstly, charging of the backup battery 5 is stopped. Then, the vehicle load L is notified of the ignition-off event. After the vehicle load L learns that the vehicle ignition is turned off, the vehicle uninterruptible power supply system completely stops the vehicle power supply P and the backup battery 5 from charging the vehicle load L.

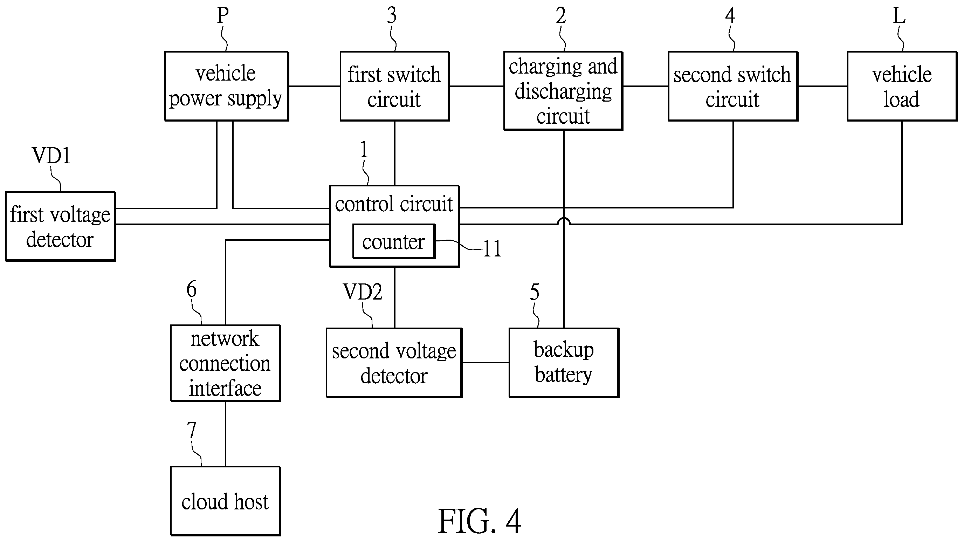

FIG. 4 is a functional block diagram of the vehicle uninterruptible power supply system according to a second embodiment of the present disclosure. Compared with the vehicle uninterruptible power supply system of FIG. 1, the vehicle uninterruptible power supply system of FIG. 4 further includes a network connection interface 6 and a cloud host 7. The network connection interface 6 can be, for example, a wired network interface or a wireless network interface. The network connection interface 6 is connected to the control circuit 1. The control circuit 1 is network-connected to the cloud host 7 by the network connection interface 6. The cloud host 7 receives input commands to adjust multiple parameters of the vehicle uninterruptible power supply system, and these parameters at least include the first voltage threshold, the second voltage threshold, the third voltage threshold, the first time threshold, the second time threshold, and the third time threshold. Therefore, according to practical requirements, users can remotely adjust the parameters of the vehicle uninterruptible power supply system. In addition, the control circuit 1 periodically reports voltage states and current states of the vehicle power supply P, the backup battery 5, and the vehicle load L to the cloud host 7. For example, the control circuit 1 reports voltage states and current states of the vehicle power supply P, the backup battery 5, and the vehicle load L to the cloud host 7 every one second.

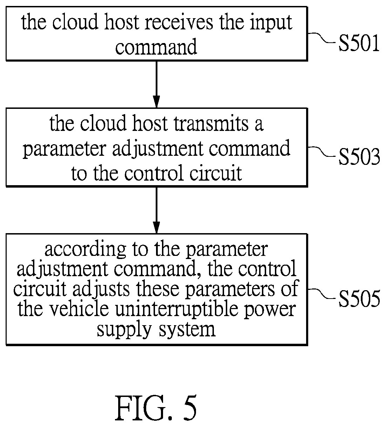

FIG. 5 is a flowchart illustrating remote parameter configuration of the vehicle uninterruptible power supply system of FIG. 4. Referring to FIG. 5, in step S501, the cloud host 7 receives the input command. In step S503, the cloud host 7 transmits a parameter adjustment command to the control circuit 1. The parameter adjustment command includes, for example, adjusting the first voltage threshold, the second voltage threshold, the third voltage threshold, the first time threshold, the second time threshold, and the third time threshold. However, the present disclosure is not limited thereto. In step S505, according to the parameter adjustment command, the control circuit 1 adjusts these parameters of the vehicle uninterruptible power supply system.

### [Beneficial Effects of the Embodiments]

In conclusion, in the vehicle uninterruptible power supply system and the control method thereof provided by the present disclosure, time points at which the vehicle power supply and the backup battery charge and do not charge the vehicle load can be controlled in a programmable manner. Accordingly, power of the vehicle power supply can be prevented from being consumed by the vehicle load, so that the power of the vehicle power supply is sufficient for starting the engine again.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. A vehicle uninterruptible power supply system, which is adapted to a vehicle load (L) and a vehicle power supply (P), the vehicle uninterruptible power supply system **characterized by** comprising:
a control circuit (1) connected to the vehicle power supply (P) and the vehicle load (L);
a charging and discharging circuit (2) connected to the control circuit (1); and
a backup battery (5) connected to the charging and discharging circuit (2) and the control circuit (1);
wherein, when the control circuit (1) receives an ignition-on signal, the control circuit (1) instructs the charging and discharging circuit (2) to use one of the vehicle power supply (P) and the backup battery (5) for charging the vehicle load (L) according to a voltage of the vehicle power supply (P) and a voltage of the backup battery (5);
the control circuit (1) includes a counter (11), and the counter (11) is activated when the control circuit (1) receives an ignition-off signal;
wherein, when a counting time of the counter (11) reaches a first time threshold, the control circuit (1) determines whether or not the voltage of the backup battery (5) is less than a second voltage threshold;
wherein, when the voltage of the backup battery (5) is less than the second voltage threshold, the charging and discharging circuit (2) uses the vehicle power supply (P) to charge the vehicle load (L);
wherein, when the voltage of the backup battery (5) is not less than the second voltage threshold, the charging and discharging circuit (2) uses the backup battery (5) to charge the vehicle load (L);
wherein, when the counting time reaches a second time threshold, the control circuit (1) outputs the ignition-off signal to the vehicle load (L);
wherein, when the counting time reaches a third time threshold, the charging and discharging circuit (2) stops using the backup battery (5) to charge the vehicle load (L).

2. The vehicle uninterruptible power supply system according to claim 1, wherein, when the vehicle power supply (P) is used to charge the vehicle load (L), the control circuit (1) determines whether or not the voltage of the backup battery (5) is less than a third voltage threshold; wherein, when the voltage of the backup battery (5) is less than the third voltage threshold, the charging and discharging circuit (2) charges the backup battery (5); wherein, when the voltage of the backup battery (5) is not less than the third voltage threshold, the charging and discharging circuit (2) uses the vehicle power supply to charge the vehicle load (L).

3. The vehicle uninterruptible power supply system according to claim 1, further comprising a network connection interface (6) and a cloud host (7); wherein the network connection interface (6) is connected to the control circuit (1), the control circuit (1) is connected to the cloud host (7) by the network connection interface (6), and the cloud host (7) is configured to set a first voltage threshold, the second voltage threshold, the first time threshold, the second time threshold, and the third time threshold.

4. A control method of a vehicle uninterruptible power supply system, comprising:
instructing, by a control circuit (1), a charging and discharging circuit (2) to use one of a vehicle power supply (P) and a backup battery (5) for charging a vehicle load (L) according to a voltage of the vehicle power supply (P) and a voltage of the backup battery (5) when the control circuit (1) receives an ignition-on signal;
instructing, by the control circuit (1), the charging and discharging circuit (2) to use one of the vehicle power supply (P) and the backup battery (5) for charging the vehicle load (L) according to the voltage of the backup battery (5) when the control circuit (1) receives an ignition-off signal; and
preventing, by the control circuit (1), the vehicle power supply (P) and the backup battery (5) from charging the vehicle load (L) when the control circuit (1) receives the ignition-off signal and after the charging and discharging circuit (2) uses one of the vehicle power supply (P) and the backup battery (5) to charge the vehicle load (L);
when the control circuit (1) receives the ignition-off signal, a counter (11) of the control circuit (1) is activated;
wherein, when a counting time of the counter (11) reaches a first time threshold, the control circuit (1) determines whether or not the voltage of the backup battery (5) is less than a second voltage threshold;
wherein, when the voltage of the backup battery (5) is less than the second voltage threshold, the vehicle power supply (P) is used to charge the vehicle load (L);
wherein, when the counting time reaches a second time threshold, the control circuit (1) outputs the ignition-off signal to the vehicle load (L);
wherein, when the counting time reaches a third time threshold, the control circuit (1) prevents the vehicle power supply (P) and the backup battery (5) from charging the vehicle load (L).

5. The control method according to claim 4, wherein, when the control circuit (1) receives the ignition-on signal, the control circuit (1) determines whether or not the voltage of the vehicle power supply (P) is less than a first voltage threshold; wherein, when the voltage of the vehicle power supply (P) is not less than the first voltage threshold, the charging and discharging circuit (2) uses the vehicle power supply (P) to charge the vehicle load (L); wherein, when the voltage of the vehicle power supply (P) is less than the first voltage threshold, the control circuit (1) determines whether or not the voltage of the backup battery (5) is less than a second voltage threshold; wherein, when the voltage of the backup battery (5) is less than the second voltage threshold, the charging and discharging circuit (2) stops using the backup battery (5) to charge the vehicle load (L); wherein, when the voltage of the backup battery (5) is not less than the second voltage threshold, the charging and discharging circuit (2) uses the backup battery (5) to charge the vehicle load (L).

6. The control method according to claim 4, further comprising: determining, by the control circuit (1), whether or not the voltage of the backup battery (5) is less than a third voltage threshold when the vehicle power supply (P) is used to charge the vehicle load (L); wherein, when the voltage of the backup battery (5) is less than the third voltage threshold, the backup battery (5) starts to be charged; wherein, when the voltage of the backup battery (5) is not less than the third voltage threshold, the vehicle power supply (P) is used to charge the vehicle load (L).

7. The control method according to claim 4, further comprising: network-connecting, by a cloud host (7), to the control circuit (1); wherein at least a first voltage threshold, the second voltage threshold, the first time threshold, the second time threshold, and the third time threshold are set by the cloud host (7).

## Patentansprüche

1. Unterbrechungsfreies Fahrzeug-Stromversorgungssystem, das an eine Fahrzeuglast (L) und eine Fahrzeugstromversorgung (P) angepasst ist, wobei das unterbrechungsfreie Fahrzeug-Stromversorgungssystem **dadurch gekennzeichnet ist, dass** es Folgendes umfasst:
eine Steuerschaltung (1), die mit der Fahrzeugstromversorgung (P) und der Fahrzeuglast (L) verbunden ist;
eine Lade- und Entladeschaltung (2), die mit der Steuerschaltung (1) verbunden ist; und
eine Backup-Batterie (5), die mit der Lade- und Entladeschaltung (2) und der Steuerschaltung (1) verbunden ist;
wobei, wenn die Steuerschaltung (1) ein Zündung-Ein-Signal empfängt, die Steuerschaltung (1) die Lade- und Entladeschaltung (2) anweist, entweder die Fahrzeugstromversorgung (P) oder die Backup-Batterie (5) zum Laden der Fahrzeuglast (L) gemäß einer Spannung der Fahrzeugstromversorgung (P) und einer Spannung der Backup-Batterie (5) zu verwenden;
die Steuerschaltung (1) einen Zähler (11) beinhaltet und der Zähler (11) aktiviert wird, wenn die Steuerschaltung (1) ein Zündung-Aus-Signal empfängt;
wobei, wenn eine Zählzeit des Zählers (11) eine erste Zeitschwelle erreicht, die Steuerschaltung (1) bestimmt, ob die Spannung der Backup-Batterie (5) kleiner als eine zweite Spannungsschwelle ist oder nicht;
wobei, wenn die Spannung der Backup-Batterie (5) kleiner als die zweite Spannungsschwelle ist, die Lade- und Entladeschaltung (2) die Fahrzeugstromversorgung (P) verwendet, um die Fahrzeuglast (L) zu laden;
wobei, wenn die Spannung der Backup-Batterie (5) nicht kleiner als die zweite Spannungsschwelle ist, die Lade-und Entladeschaltung (2) die Backup-Batterie (5) verwendet, um die Fahrzeuglast (L) zu laden;
wobei, wenn die Zählzeit eine zweite Zeitschwelle erreicht, die Steuerschaltung (1) das Zündung-Aus-Signal an die Fahrzeuglast (L) ausgibt;
wobei, wenn die Zählzeit eine dritte Zeitschwelle erreicht, die Lade- und Entladeschaltung (2) die Verwendung der Backup-Batterie (5) zum Laden der Fahrzeuglast (L) stoppt.

2. Unterbrechungsfreies Fahrzeug-Stromversorgungssystem nach Anspruch 1, wobei, wenn die Fahrzeugstromversorgung (P) zum Laden der Fahrzeuglast (L) verwendet wird, die Steuerschaltung (1) bestimmt, ob die Spannung der Backup-Batterie (5) kleiner als eine dritte Spannungsschwelle ist oder nicht; wobei, wenn die Spannung der Backup-Batterie (5) kleiner als die dritte Spannungsschwelle ist, die Lade- und Entladeschaltung (2) die Backup-Batterie (5) lädt; wobei, wenn die Spannung der Backup-Batterie (5) nicht kleiner als die dritte Spannungsschwelle ist, die Lade- und Entladeschaltung (2) die Fahrzeugstromversorgung verwendet, um die Fahrzeuglast (L) zu laden.

3. Unterbrechungsfreies Fahrzeug-Stromversorgungssystem nach Anspruch 1, ferner umfassend eine Netzwerkverbindungsschnittstelle (6) und einen Cloud-Host (7); wobei die Netzwerkverbindungsschnittstelle (6) mit der Steuerschaltung (1) verbunden ist, die Steuerschaltung (1) durch die Netzwerkverbindungsschnittstelle (6) mit dem Cloud-Host (7) verbunden ist und der Cloud-Host (7) dazu ausgelegt ist, eine erste Spannungsschwelle, die zweite Spannungsschwelle, die erste Zeitschwelle, die zweite Zeitschwelle und die dritte Zeitschwelle einzustellen.

4. Steuerverfahren eines unterbrechungsfreien Fahrzeug-Stromversorgungssystems, umfassend:
Anweisen, durch eine Steuerschaltung (1), einer Lade- und Entladeschaltung (2), entweder eine Fahrzeugstromversorgung (P) oder eine Backup-Batterie (5) zum Laden einer Fahrzeuglast (L) gemäß einer Spannung der Fahrzeugstromversorgung (P) und einer Spannung der Backup-Batterie (5) zu verwenden, wenn die Steuerschaltung (1) ein Zündung-Ein-Signal empfängt;
Anweisen, durch die Steuerschaltung (1), der Lade- und Entladeschaltung (2), entweder die Fahrzeugstromversorgung (P) oder die Backup-Batterie (5) zum Laden der Fahrzeuglast (L) gemäß der Spannung der Backup-Batterie (5) zu verwenden, wenn die Steuerschaltung (1) ein Zündung-Aus-Signal empfängt; und
Verhindern, durch die Steuerschaltung (1), dass die Fahrzeugstromversorgung (P) und die Backup-Batterie (5) die Fahrzeuglast (L) laden, wenn die Steuerschaltung (1) das Zündung-Aus-Signal empfängt und nachdem die Lade- und Entladeschaltung (2) entweder die Fahrzeugstromversorgung (P) oder die Backup-Batterie (5) zum Laden der Fahrzeuglast (L) verwendet;
wenn die Steuerschaltung (1) das Zündung-Aus-Signal empfängt, wird ein Zähler (11) der Steuerschaltung (1) aktiviert;
wobei, wenn eine Zählzeit des Zählers (11) eine erste Zeitschwelle erreicht, die Steuerschaltung (1) bestimmt, ob die Spannung der Backup-Batterie (5) kleiner als eine zweite Spannungsschwelle ist oder nicht;
wobei, wenn die Spannung der Backup-Batterie (5) kleiner als die zweite Spannungsschwelle ist, die Fahrzeugstromversorgung (P) verwendet wird, um die Fahrzeuglast (L) zu laden;
wobei, wenn die Zählzeit eine zweite Zeitschwelle erreicht, die Steuerschaltung (1) das Zündung-Aus-Signal an die Fahrzeuglast (L) ausgibt;
wobei, wenn die Zählzeit eine dritte Zeitschwelle erreicht, die Steuerschaltung (1) verhindert, dass die Fahrzeugstromversorgung (P) und die Backup-Batterie (5) die Fahrzeuglast (L) laden.

5. Steuerverfahren nach Anspruch 4, wobei, wenn die Steuerschaltung (1) das Zündung-Ein-Signal empfängt, die Steuerschaltung (1) bestimmt, ob die Spannung der Fahrzeugstromversorgung (P) kleiner als eine erste Spannungsschwelle ist oder nicht; wobei, wenn die Spannung der Fahrzeugstromversorgung (P) nicht kleiner als die erste Spannungsschwelle ist, die Lade- und Entladeschaltung (2) die Fahrzeugstromversorgung (P) zum Laden der Fahrzeuglast (L) verwendet; wobei, wenn die Spannung der Fahrzeugstromversorgung (P) kleiner als die erste Spannungsschwelle ist, die Steuerschaltung (1) bestimmt, ob die Spannung der Backup-Batterie (5) kleiner als eine zweite Spannungsschwelle ist oder nicht; wobei, wenn die Spannung der Backup-Batterie (5) kleiner als die zweite Spannungsschwelle ist, die Lade- und Entladeschaltung (2) die Verwendung der Backup-Batterie (5) zum Laden der Fahrzeuglast (L) stoppt; wobei, wenn die Spannung der Backup-Batterie (5) nicht kleiner als die zweite Spannungsschwelle ist, die Lade- und Entladeschaltung (2) die Backup-Batterie (5) verwendet, um die Fahrzeuglast (L) zu laden.

6. Steuerverfahren nach Anspruch 4, ferner umfassend: Bestimmen, durch die Steuerschaltung (1), ob die Spannung der Backup-Batterie (5) kleiner als eine dritte Spannungsschwelle ist oder nicht, wenn die Fahrzeugstromversorgung (P) zum Laden der Fahrzeuglast (L) verwendet wird; wobei, wenn die Spannung der Backup-Batterie (5) kleiner als die dritte Spannungsschwelle ist, der Ladevorgang der Backup-Batterie (5) beginnt; wobei, wenn die Spannung der Backup-Batterie (5) nicht kleiner als die dritte Spannungsschwelle ist, die Fahrzeugstromversorgung (P) verwendet wird, um die Fahrzeuglast (L) zu laden.

7. Steuerverfahren nach Anspruch 4, ferner umfassend: Netzwerkverbinden, durch einen Cloud-Host (7), mit der Steuerschaltung (1); wobei zumindest eine erste Spannungsschwelle, die zweite Spannungsschwelle, die erste Zeitschwelle, die zweite Zeitschwelle und die dritte Zeitschwelle durch den Cloud-Host (7) eingestellt werden.

## Revendications

1. Système d'alimentation électrique sans interruption pour véhicule, qui est adapté à une charge de véhicule (L) et à une alimentation électrique de véhicule (P), le système d'alimentation électrique sans interruption pour véhicule étant **caractérisé en ce qu'**il comprend :
un circuit de commande (1) connecté à l'alimentation électrique de véhicule (P) et à la charge de véhicule (L) ;
un circuit de charge et de décharge (2) connecté au circuit de commande (1) ; et
une batterie de secours (5) connectée au circuit de charge et de décharge (2) et au circuit de commande (1) ;
dans lequel, lorsque le circuit de commande (1) reçoit un signal de contact mis, le circuit de commande (1) donne instruction au circuit de charge et de décharge (2) d'utiliser l'une parmi l'alimentation électrique de véhicule (P) et la batterie de secours (5) pour la charge de la charge de véhicule (L) en fonction d'une tension de l'alimentation électrique de véhicule (P) et d'une tension de la batterie de secours (5) ;
le circuit de commande (1) comportant un compteur (11), et le compteur (11) étant activé lorsque le circuit de commande (1) reçoit un signal de contact coupé ;
dans lequel, lorsqu'une durée de comptage du compteur (11) atteint un premier seuil de durée, le circuit de commande (1) détermine si la tension de la batterie de secours (5) est ou non inférieure à un deuxième seuil de tension ;
dans lequel, lorsque la tension de la batterie de secours (5) est inférieure au deuxième seuil de tension, le circuit de charge et de décharge (2) utilise l'alimentation électrique de véhicule (P) pour charger la charge de véhicule (L) ;
dans lequel, lorsque la tension de la batterie de secours (5) n'est pas inférieure au deuxième seuil de tension, le circuit de charge et de décharge (2) utilise la batterie de secours (5) pour charger la charge de véhicule (L) ;
dans lequel, lorsque la durée de comptage atteint un deuxième seuil de durée, le circuit de commande (1) délivre le signal de contact coupé à la charge de véhicule (L) ;
dans lequel, lorsque la durée de comptage atteint un troisième seuil de durée, le circuit de charge et de décharge (2) cesse d'utiliser la batterie de secours (5) pour charger la charge de véhicule (L).

2. Système d'alimentation électrique sans interruption pour véhicule selon la revendication 1, dans lequel, lorsque l'alimentation électrique de véhicule (P) est utilisée pour charger la charge de véhicule (L), le circuit de commande (1) détermine si la tension de la batterie de secours (5) est ou non inférieure à un troisième seuil de tension ; dans lequel, lorsque la tension de la batterie de secours (5) est inférieure au troisième seuil de tension, le circuit de charge et de décharge (2) charge la batterie de secours (5) ; dans lequel, lorsque la tension de la batterie de secours (5) n'est pas inférieure au troisième seuil de tension, le circuit de charge et de décharge (2) utilise l'alimentation électrique de véhicule pour charger la charge de véhicule (L).

3. Système d'alimentation électrique sans interruption pour véhicule selon la revendication 1, comprenant en outre une interface de connexion réseau (6) et un hôte (7) dans le cloud ; dans lequel l'interface de connexion réseau (6) est connectée au circuit de commande (1), le circuit de commande (1) est connecté à l'hôte (7) dans le cloud par l'interface de connexion réseau (6), et l'hôte (7) dans le cloud est configuré pour fixer un premier seuil de tension, le deuxième seuil de tension, le premier seuil de durée, le deuxième seuil de durée et le troisième seuil de durée.

4. Procédé de commande d'un système d'alimentation électrique sans interruption pour véhicule, comprenant :
l'instruction donnée, par un circuit de commande (1), à un circuit de charge et de décharge (2), d'utiliser l'une parmi une alimentation électrique de véhicule (P) et une batterie de secours (5) pour la charge d'une charge de véhicule (L) en fonction d'une tension de l'alimentation électrique de véhicule (P) et d'une tension de la batterie de secours (5) lorsque le circuit de commande (1) reçoit un signal de contact mis ;
l'instruction donnée, par le circuit de commande (1), au circuit de charge et de décharge (2), d'utiliser l'une parmi l'alimentation électrique de véhicule (P) et la batterie de secours (5) pour la charge de la charge de véhicule (L) en fonction de la tension de la batterie de secours (5) lorsque le circuit de commande (1) reçoit un signal de contact coupé ; et
l'empêchement, par le circuit de commande (1), de la charge de la charge de véhicule (L) par l'alimentation électrique de véhicule (P) et la batterie de secours (5) lorsque le circuit de commande (1) reçoit le signal de contact coupé et après que le circuit de charge et de décharge (2) a utilisé l'une parmi l'alimentation électrique de véhicule (P) et la batterie de secours (5) pour charger la charge de véhicule (L) ;
un compteur (11) du circuit de commande (1) étant activé lorsque le circuit de commande (1) reçoit le signal de contact coupé ;
dans lequel, lorsqu'une durée de comptage du compteur (11) atteint un premier seuil de durée, le circuit de commande (1) détermine si la tension de la batterie de secours (5) est ou non inférieure à un deuxième seuil de tension ;
dans lequel, lorsque la tension de la batterie de secours (5) est inférieure au deuxième seuil de tension, l'alimentation électrique de véhicule (P) est utilisée pour charger la charge de véhicule (L) ;
dans lequel, lorsque la durée de comptage atteint un deuxième seuil de durée, le circuit de commande (1) délivre le signal de contact coupé à la charge de véhicule (L) ;
dans lequel, lorsque la durée de comptage atteint un troisième seuil de durée, le circuit de commande (1) empêche la charge de la charge de véhicule (L) par l'alimentation électrique de véhicule (P) et la batterie de secours (5).

5. Procédé de commande selon la revendication 4, dans lequel, lorsque le circuit de commande (1) reçoit le signal de contact mis, le circuit de commande (1) détermine si la tension de l'alimentation électrique de véhicule (P) est ou non inférieure à un premier seuil de tension ; dans lequel, lorsque la tension de l'alimentation électrique de véhicule (P) n'est pas inférieure au premier seuil de tension, le circuit de charge et de décharge (2) utilise l'alimentation électrique de véhicule (P) pour charger la charge de véhicule (L) ; dans lequel, lorsque la tension de l'alimentation électrique de véhicule (P) est inférieure au premier seuil de tension, le circuit de commande (1) détermine si la tension de la batterie de secours (5) est ou non inférieure à un deuxième seuil de tension ; dans lequel, lorsque la tension de la batterie de secours (5) est inférieure au deuxième seuil de tension, le circuit de charge et de décharge (2) cesse d'utiliser la batterie de secours (5) pour charger la charge de véhicule (L) ; dans lequel, lorsque la tension de la batterie de secours (5) n'est pas inférieure au deuxième seuil de tension, le circuit de charge et de décharge (2) utilise la batterie de secours (5) pour charger la charge de véhicule (L).

6. Procédé de commande selon la revendication 4, comprenant en outre : la détermination, par le circuit de commande (1), si la tension de la batterie de secours (5) est ou non inférieure à un troisième seuil de tension lorsque l'alimentation électrique de véhicule (P) est utilisée pour charger la charge de véhicule (L) ; dans lequel, lorsque la tension de la batterie de secours (5) est inférieure au troisième seuil de tension, la batterie de secours (5) commence à être chargée ; dans lequel, lorsque la tension de la batterie de secours (5) n'est pas inférieure au troisième seuil de tension, l'alimentation électrique de véhicule (P) est utilisée pour charger la charge de véhicule (L).

7. Procédé de commande selon la revendication 4, comprenant en outre : la connexion réseau, par un hôte (7) dans le cloud, au circuit de commande (1) ; dans lequel au moins un premier seuil de tension, le deuxième seuil de tension, le premier seuil de durée, le deuxième seuil de durée et le troisième seuil de durée sont fixés par l'hôte (7) dans le cloud.
